# EUROPEAN PATENT APPLICATION

(11) **EP 4 527 479 A1**
(43) Date of publication of application: **26.03.2025**
(21) Application number: 23460035.1
(22) Date of filing: 31.10.2023
(51) Int. Cl.: B01D 15/18, C11B 9/02

(54) **METHOD FOR REMOVAL OF BETA-ASARONE FROM ACORUS CALAMUS ESSENTIAL OIL**

(30) Priority: 20.12.2022 PL 44319922
(71) Applicant: Politechnika Gdanska, 80-233 Gdansk (PL); Uniwersytet Medyczny w Lublinie, 20-059 Lublin (PL)
(72) Inventor: Szczeblewski, Pawel, 83-110 Tczew (PL); Bairamova, Tetiana, 81-002 Gdynia (PL); Borzyszkowska-Bukowska, 80-254 Gansk (PL); Laskowski, Tomasz, 81-173 Gdynia (PL); Kukula-Koch, Wirginia, 20-452 Lublin (PL)
(74) Representative: Pawlowska-Bajerska, Justyna

(57) **Abstract**

The invention is a method for the removal of the toxic asarone or β-asarone from the essential oil obtained from the *Acorus calamus,* and is characterized by the fact that a biphasic solvent system is prepared with the developed composition n-hexane: ethyl acetate: methanol: water, in percentages relative to the total mixture constituting the volumetric mixture of the above-mentioned solvents: 35-52% (v/v) n-hexane, 2-12% ethyl acetate, 35-52% 7 (v/v) methanol, 2-12% (v/v) water. These solvents in these proportions are mixed and, as a result, divide into two phases - one is stationary, whereas the other is mobile. Both of them, in the aforementioned proportions, form the chromatographic column in which the essential oil is separated. After equilibration step, the calamus oil is introduced into the column and separation is carried out by centrifugal partition chromatography (CPC) in ascending mode (ASC), using a column rotating at 1000-2400 rpm, with a volumetric flow rate of the mobile phase of 1-15 ml/min. Separation process is carried out in elution mode through three column volumes, followed by the introduction of a stationary phase extrusion step.

## Description

The invention relates to the purification of calamus essential oil obtained from the rhizomes of *Acorus calamus* by removing harmful β-asarone.

Calamus essential oil has several pharmaceutically important properties, i.e. neuroprotective, antidepressant, anticonvulsant, sedative, sleep-inducing, anti-anxiety, memory-enhancing, anti-asthmatic, antithrombotic, anti-inflammatory, antioxidant, antitumor, antimicrobial and insecticidal. On the other hand, there is an increasing number of reports indicating the cardiotoxicity, hepatotoxicity and mutagenicity of one of the constituents of the preparations obtained from calamus: β-asarone. Following the publications on the toxicity of asarones, the use of β-asarone was banned in the European Union, both in its pure form and in the composition of the essential oil obtained from the tetraploid variety of calamus. For the same reason, there is an absolute prohibition on oils and preparations derived from calamus in the United States.

The oil and extract are obtained from plants of the genus *Acorus.* Depending on the species and place of origin, the composition of the plants and preparations can vary. The most common and widely used species in Poland and Europe is *Acorus calamus.* The oils obtained from this plant contain many valuable metabolites. For therapeutic purposes, an extract or - more commonly - an oil is used, differing in the composition of natural compounds. Among the leading components of both preparations are α- and β-asarone. The oil, which is produced on an industrial scale, is characterized by a higher content of asarones.

Due to the previously confirmed toxic effects of β-asarone, it is important to remove it from calamus oil.

A method using high speed counter-current chromatography (HSCCC) for the isolation of α- and β-asarone from extracts of the species *Acorus tatarinowii,* which is not widespread in Europe but is found in Asia, was reported in publication CN112552150. This method uses a hexane-ethyl acetate-methanol-water solvent system to fractionate extracts (not essential oil) of the species *Acorus tatarinowii* Schott. It is noteworthy that the extract is characterized by a different composition with respect to the oil. The disadvantages of the method described in publication CN112552150 are the long fractionation time and the lack of possibility to transfer the conditions to industrial scale due to the use of the HSCCC technique generating too high operating pressure for industrial-scale isolation. In addition, this method might allows isolation of asarones only from the extract and not from the essential oil.

The aim of the invention was to develop And provide a method for removing toxic β-asarone from calamus essential oil (from the species *Acorus calamus*) and thereby to obtain an essential oil free or almost free of this dangerous compound. This method will be considerably shorter (around 2x faster) and will guarantee the possibility of carrying out the above process on an industrial scale, in comparison with the methodology proposed previously. Thus, the invention enables the production of *Acorus calamus* essential oil, which is free of harmful, toxic asarone, or contains marginal amounts of it.

The object of the invention is a method for removal of the toxic β-asarone from the essential oil obtained from sweet flag (*Acorus calamus*)*.* The method also allows the removal of α-asarone, but the β-isomer is targeted due to its toxicity. The method of the invention allows the complete removal of β-asarone from calamus oil and was established as follows: a biphasic solvent system is prepared with the developed composition n-hexane: ethyl acetate: methanol: water, in percentages relative to the total mixture constituting the volumetric mixture of the above-mentioned solvents, 35-52% (v/v) n-hexane, 2-12% ethyl acetate, 35-52% (v/v) methanol, 2-12% (v/v) water. These solvents in such proportions are mixed, which results in two separate phases. While one of the phases is stationary, the other is mobile, and together, in the appropriate proportions, both phases form the chromatographic column in which the essential oil is separated. The calamus oil is then introduced into the column and separation is carried out by centrifugal partition chromatography (CPC) in ascending mode (ASC), using a column rotation of 1000-2400 rpm, with a flow rate of the mobile phase of 1-15 ml/min. Process is carried out in elution mode through three column volumes, followed by extrusion step, which is the introduction of a fresh stationary phase involving preferably one column volume. Depending on the size of the apparatus (column purchased) this volume will vary. For a 250 ml column it will be 250 ml, while for a 1 l column it will be 1 liter, and so on. This is a common knowledge to a person familiar with the state of the art. The separation process is monitored at a wavelength that is characteristic of the oil components - λ=254 nm. The fractions containing β-asarone are separated from the other oil components, and those lacking β-asarone are combined and then the mobile phase is evaporated under reduced pressure.

The invention makes it possible to remove β-asarone from calamus essential oil in a rapid and efficient manner, with relatively little investment and is also characterized by an easy transfer of conditions to preparative or industrial scale.

Main advatages - benefits of the invention are:
- obtaining an essential oil free of toxic β-asarone in a fast, efficient and inexpensive way.
- ease of transfer of the method to an industrial scale
- production of calamus oil in accordance with EU legal standards
- production of a β-asarone-free bioherbicide.

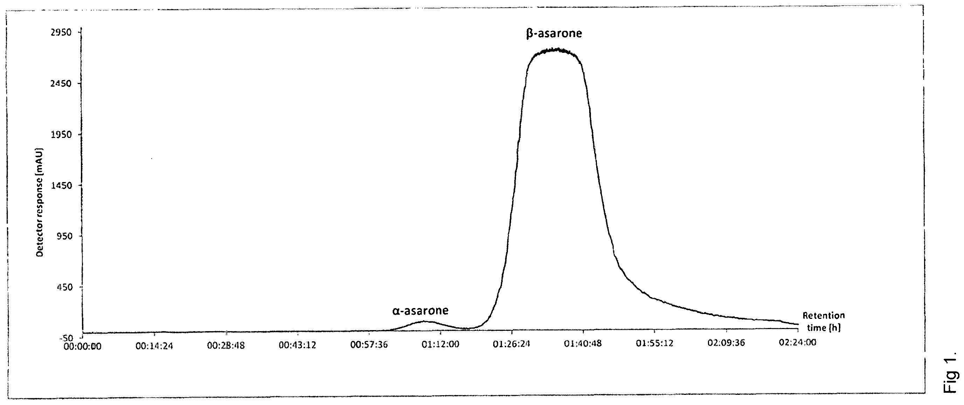

The invention is described in more detail below. Figure 1 shows the chromatogram obtained during the separation. Figure - the CPC-DAD chromatogram obtained in the removal of β-asarone from the essential oil of sweet flag (*Acorus calamus*), confirms the selectivity of the system and the effective separation of β-asarone from the other components of the oil. The used fractionation conditions enabled the toxic β-asarone to be separated from the other components of the essential oil, so that it can be effectively removed from the mixture.

### Example 1.

Removal of β-asarone from 1 mL of calamus oil was performed on a Gilson CPC-250 centrifugal partition chromatograph equipped with a 250 mL column, an Ecom flash 14 DAD 600 detector and a Gilson LS-5600 fraction collector (all equipment from Gilson Inc., Middleton, Wl, USA). A biphasic solvent system: n-hexane: ethyl acetate: methanol: water (9:1:9:1, v/v/v/v) was prepared by mixing appropriate portions of the solvents at room temperature (900 ml: 100 ml: 900 ml: 100 ml). The separation was carried out in ascending mode (ASC), using the upper phase as the mobile phase. First, 360 ml of the lower phase was introduced into the column at a flow rate of 30 ml/min and a rotational speed of 500 rpm for 12 min. The upper phase was then pumped through the stationary phase for a further 13 min at a flow rate of 5 ml/min and a rotational speed of 2200 rpm, until equilibrium was reached at a pressure of approximately 50 bar. Then 1 mL of *Acorus calamus* essential oil dissolved in 9 ml of equal volumes of the upper and lower phases (1:1, v/v) was introduced into the column and the separation was carried out. The upper phase was pumped for 150 min at a flow rate of 5 ml/min and a rotational speed of 2200 rpm, collecting 12 ml per fraction (750 ml total). After this time, the 300 ml of lower phase was introduced into the column, at a flow rate of 30 ml/min and a rotational speed of 500 rpm for 10 min (extrusion step). A total time of separation process was 160 min. The compound of interest started to leave the column at 75 min and finished at about 120 min. Separation was carried out at room temperature with a monitored wavelength of A=254 nm. Data were collected and processed using Gilson Glider CPC V5.1d.01 software. The composition of the fractions was confirmed using HPLC-ESI-QTOF-MS/MS and their purity was examined using HPLC-DAD. In a final step, all fractions except those containing β-asarone were combined and the solvents were evaporated under reduced pressure of 5-7 mbar at a temperature not exceeding 35°C. It can be seen from Figure 1 that the introduction of calamus essential oil into the CPC column under the conditions described above resulted in the separation of β-asarone from the other components of the oil. β-asarone (95.5%) was present in the fractions collected between 75 min and 120 min of separation. These fractions almost exclusively contained the removed compound, hence were characterized by a high purity. To obtain the chromatogram in fig. 1 a CPC 250 ml rotor was used and two-phase solvent system: hexane: ethyl acetate: methanol: water (9: 1: 9: 1; v/v/v/v). Conditions: rotational speed: 2200 rpm, ASC mode, mobile phase flow rate ω = 5 ml / min, injection volume v= 10 ml, room temperature, monitored wavelength λ=254 nm.

## Claims

1. Method for removal of β-asarone from calamus essential oil obtained from *Acorus calamus,* **characterized in that** a biphasic solvent mixture is prepared with the formulated composition n-hexane: ethyl acetate: methanol: water, in percentages relative to the total mixture such as: 35-52% (v/v) n-hexane (v/v), 2- 12% ethyl acetate, 35-52% (v/v) methanol, 2-12% (v/v) water, and the solvents in these proportions are mixed and the resulting mixture is separated into two phases, and after that the separation of calamus essential oil is carried out by centrifugal partition chromatography (CPC) in ascending mode (ASC), using a column rotating at 1000-2400 rpm, at a mobile phase flow rate of 1-15 ml/min, then a stationary phase extrusion step is introduced and the separation is monitored at a wavelength for chromatography, after which the β-asarone-free fractions are collected and combined and the mobile phase is removed by evaporation.

2. Method according to claim. 1, while the separation of calamus oil is carried out by centrifugal partition chromatography (CPC) in ascending mode (ASC) using the column rotation of 1000-2400 rpm at a volumetric flow rate of the mobile phase of 1-15 ml/min, through 2-5 column volumes.

3. Method according to claim. 1, while the stationary phase extrusion step with one column volume is introduced.
